(19) Europäisches Patentamt
European Patent Office
Office européen des brevets

(11) **EP 3 493 158 A1**

(12) **EUROPEAN PATENT APPLICATION**

(43) Date of publication:
**05.06.2019 Bulletin 2019/23**

(51) Int Cl.:
*G06T 9/40* [(2006.01)]   *H04N 19/597* [(2014.01)]
*H04N 19/147* [(2014.01)]   *H04N 19/96* [(2014.01)]
*H04N 19/593* [(2014.01)]   *H04N 19/11* [(2014.01)]
*H04N 19/107* [(2014.01)]   *H04N 19/19* [(2014.01)]
*H04N 19/54* [(2014.01)]

(21) Application number: **17306698.6**

(22) Date of filing: **04.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• **LASSERRE, Sébastien**
  **35576 Cesson-Sévigné (FR)**
• **RICARD, Julien**
  **35576 Cesson-Sévigné (FR)**
• **GUEDE, Céline**
  **35576 Cesson-Sévigné (FR)**

(74) Representative: **Amor, Rim et al**
**InterDigital CE Patent Holdings**
**20, rue Rouget de Lisle**
**92130 Issy-les-Moulineaux (FR)**

(54) **A METHOD AND APPARATUS FOR ENCODING/DECODING THE GEOMETRY OF A POINT CLOUD REPRESENTING A 3D OBJECT**

(57)   A method for encoding the geometry of a point cloud (IPC) representing a 3D object comprising:
a) determining (120) if a local octree-based structure ($O_k$) is associated with an encompassing cube including at least one point of the point cloud (IPC);
b) encoding (130) a first leaf node information data (FLID) indicating if a local octree-based structure ($O_k$) has been determined for said encompassing cube (C);
c) if said first leaf node information data (FLID) indicates that a local octree-based structure ($O_k$) has been deter-
mined for said encompassing cube (C),
d) encoding (140) an octree information data (SOID) representative of said determined local octree-based structure ($O_k$); and
e) encoding a (150) local coding model information data (IND) representing a local coding model defining a set of points resulting from a processing of a part of the point cloud.

**Fig. 10**

**Description**

**2. Field.**

The present principles generally relate to coding and decoding of a point cloud representing the geometry a 3D object. Particularly, but not exclusively, the technical field of the present principles are related to octree-based encoding/decoding of point cloud.

**3. Background.**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair or fur that may not be represented efficiently by other data format like meshes. Each point of a point cloud is often defined by a 3D spatial location (X, Y, and Z coordinates in the 3D space) and possibly by other associated attributes such as color, represented in the RGB or YUV color space for example, a transparency, a reflectance, a two-component normal vector, etc.

A colored point cloud may be a set of 6-components points (X, Y, Z, R, G, B) or equivalently (X, Y, Z, Y, U, V) where (X,Y,Z) defines the spatial location of a point in a 3D space and (R,G,B) or (Y,U,V) defines a color of this point.

In the following, the term "point cloud" refers to any point cloud including a colored point cloud.

Colored point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, colored point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decisions based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of the sensed object and may help the decisions.

Virtual Reality (VR) and immersive worlds have become a hot topic recently and foreseen by many as the future of 2D flat video. The basic idea is to immerse the viewer in an environment all round him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches project a colored point cloud representing the geometry and colors of a 3D object, onto the faces of a cube encompassing the 3D object to obtain videos on texture and depth, and code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I).

Performance of compression is close to video compression for each projected point, but some contents may be more complex because of occlusions, redundancy and temporal stability when dynamic point clouds are considered. Consequently, point cloud compression is more demanding than video compression in term of bit-rates.

Regarding occlusions, it is virtually impossible to get the full geometry of a complex topology without using many projections. The required resources (computing power, storage memory) for encoding/decoding all these projections are thus usually too high.

Octree-based encoding is also a well-known approach for encoding the geometry of a point cloud. An octree-based structure is obtained for representing the geometry of the point cloud by splitting recursively a cube encompassing the point cloud until the leaf cubes, associated with the leaf nodes of said octree-based structure, contain no more than one point of the point cloud. The spatial locations of the leaf nodes of the octree-based structure thus represent the spatial locations of the points of the point cloud, i.e. its geometry.

Such splitting process thus requires important resources in term of computing power because the splitting decisions are done over the whole point cloud which may comprise a huge number of points.

Therefore, there is a trade-off to be found between obtaining a good representation of the geometry of a point cloud without using an optimization process having a high computing complexity.

**4. Summary.**

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles relate to a two-steps approach for encoding the geometry of a point cloud. In a first step, an octree-based structure is obtained by splitting recursively a cube encompassing the point cloud until the leaf cubes associated with the leaf nodes of said octree-based structure reach down an expected size. In a second step, for each leaf cube associated with the leaf nodes of said octree-based structure (IO), the approach determines if a local octree-based structure is associated (or not) with a leaf cube by using a Rate-Distortion Optimization process that optimizes a trade-off between a bit-rate for encoding a candidate octree-based structure approximating the geometry of points of the point cloud which are included in said leaf cube of the octree-based structure, and a distortion that takes into account spatial distances between, on one hand, said points of the point cloud, and on the other hand, points included in leaf cubes associated with leaf nodes of the candidate octree-based structure.

Representing the geometry of a point cloud by the octree-based structure (step 1) and local octree-based structures (step 2) is advantageous because it allows to determine locally an optimal representation of the geometry, i.e. the optimization process optimizes the octree-based on a smaller amount of points, thus reducing dramatically the complexity of optimization which is usually done over the whole set of points of the point cloud.

Another advantage is to profit from the possibility of prediction of a local octree-based structure by an already coded neighboring octree-based structure. This advantage is similar to the advantage of decomposing an image into coding blocks as performed in many video compression standards, for instance in HEVC, and then using intra prediction between blocks (here intra prediction of octree-based structure).

Also, considering dynamic point clouds, it is possible to obtain a temporal prediction of a local octree-based structure from already coded points at a preceding time. Again, this advantage is similar to the advantage of inter temporal prediction between blocks as applied in many video compression standards. Using local octree-based structures allows for a practical motion search because it is performed on a reasonable amount of points.

The present principles relate to a method and a device for encoding the geometry of a point cloud representing a 3D object. The method comprises:

a) determining if a local octree-based structure is associated with an encompassing cube including at least one point of the point cloud by optimizing a trade-off between a bit-rate for encoding a candidate octree-based structure approximating the geometry of points of the point cloud which are included in said encompassing cube, and a distortion taking into account spatial distances between, on one hand, said points of the point cloud which are included in said encompassing cube, and on the other hand, points included in leaf cubes associated with leaf nodes of the candidate octree-based structure;

b) encoding a first leaf node information data indicating if a local octree-based structure has been determined for said encompassing cube;

c) if said first leaf node information data indicates that a local octree-based structure has been determined for said encompassing cube,

d) encoding an octree information data representative of said determined local octree-based structure; and

e) encoding a local coding model information data representing a local coding model defining a set of points resulting from a processing of a part of the point cloud.

Thus, each leaf cube can be encoded with a specific local model identified by the local coding model information, the geometry of the point cloud being coded by the points defined by all the local models associated with leaf cubes.

Advantageously, the method comprises encoding at least one parameter of the local coding model.

Advantageously, the local coding model information data comprises an index associated with the local coding model.

According to an embodiment, the method also comprises steps of or the device also comprises means for:

- determining an octree-based structure comprising at least one cube, by splitting recursively a cube encompassing the point cloud until the leaf cubes, associated with the leaf nodes of said octree-based structure, reach down an expected size;
- encoding another octree information data representative of the octree-based structure; and
- encoding each leaf cube, associated with the leaf nodes of said octree-based structure from steps a-e).

According to an embodiment, the processing consists in adding a single point in a leaf cube associated with the leaf node.

Advantageously, the single point is located in the center of the leaf cube. In this case, the position of the point is implicitly determined and it is not necessary to further encode a parameter of the local coding model corresponding to this processing.

According to an embodiment, the processing consists in an up-sampling.

According to an embodiment, the processing consists in an inter-coding of frames.

According to an embodiment, the processing consists in creating a plane in a leaf cube associated with the leaf node.

In this last case, the parameters of the local coding model are the parameters of the plane.

According to another of their aspects, the present principles also relate to a method and a device for decoding, from a bitstream, a point cloud representing a 3D object. The method comprises:

f) decoding, from the bitstream, a first leaf node information data indicating if a local octree-based structure has been determined for an encompassing cube including at least one point representing at least a part of the point cloud to be decoded;

g) if said first leaf node information data indicates that a local octree-based structure has been associated with said encompassing cube,

h) decoding, from the bitstream, an octree information data representative of said determined local octree-based structure, and a local coding model information data representing a local coding model defining a set of points resulting from a processing of a part of the point cloud;

i) obtaining a local octree-based structure for said encompassing cube from said octree information data;

j) determining if a leaf cube of said local octree-based structure includes a set of points of the point cloud to be decoded from the local coding model information data, and in that case, adding the set of points to the leaf cube of said local octree-based structure.

Advantageously, the method comprises decoding at least one parameter of the local coding model.

According to an embodiment, the method also comprises steps for or the device also comprises means for:

- decoding, from the bitstream, another octree information data;
- obtaining an octree-based structure from said another octree information data;
- for each of the leaf cube of said octree-based structure,

- obtaining a local octree-based structure for said leaf cube from steps f-j).

According to another of their aspects, the present principles also relate to a signal carrying:

- a first octree information data representative of an octree-based structure representing a splitting of a 3D space delimited by a cube encompassing a point cloud representing a 3D object;
- for each leaf cube, associated with the leaf nodes of said octree-based structure,
- a first leaf node information data indicating if a local octree-based structure has been determined for each leaf cube associated with a leaf node of said octree-based structure;
- if a first leaf node information data indicates that a local octree-based structure has been determined for a leaf cube,

- a second octree information data representative of said determined local octree-based structure; and
- a local coding model information data representing a local coding model defining a set of points resulting from a processing of a part of the point cloud.

According to another of their aspects, the present principles also relate to a non-transitory processor-readable medium having stored thereon instructions to execute the steps of an above method when this program is executed on a computer.

The specific nature of the present principles as well as other objects, advantages, features and uses of the present principles will become evident from the following description of examples taken in conjunction with the accompanying drawings.

## 5. Brief Description of Drawings.

In the drawings, examples of the present principles are illustrated. It shows:

- **Fig. 1** shows schematically a diagram of the steps of the method for encoding the geometry of a point cloud representing a 3D object in accordance with an example of the present principles;
- **Fig. 2** illustrates an example of an octree-based structure;
- **Fig. 3** shows the diagram of the sub-steps of the step 120 in accordance with an embodiment of the present principles;
- **Fig. 4** shows an illustration of an example of a candidate octree-based structure, according to the middle point local model;
- **Fig. 5** shows an illustration of an example of a candidate octree-based structure, according to the upsampler local model;
- **Fig. 6** shows an illustration of an example of a candidate octree-based structure, according to the intercoding local model;
- **Fig. 7** shows an illustration of an example of a candidate octree-based structure, according to the plane local model;
- **Fig. 8a** and **Fig. 8b** show an example of partitioning of the neighborhood in the case of the plane local model;
- **Fig. 9** shows an example of creation of planes in the case of the plane local model;
- **Fig. 10** shows an illustration of an example of a candidate octree-based structure, according to a combination of several local models;
- **Fig. 11** shows an illustration of an example of neighboring Largest Octree Units;
- **Fig. 12** shows schematically a diagram of the steps of the method for decoding, from a bitstream, the geometry of a point cloud representing a 3D object in accordance with an example of the present principles;
- **Fig. 13** shows an example of an architecture of a device in accordance with an example of present principles; and
- **Fig.14** shows two remote devices communicating over a communication network in accordance with an example of present principles;
- **Fig. 15** shows the syntax of a signal in accordance with an example of present principles.

Similar or same elements are referenced with the same reference numbers.

## 6. Description of examples of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding a colored point cloud but extends to the encoding/decoding of a sequence of colored point clouds because each colored point cloud of the sequence is sequentially encoded/decoded as described below.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **nv** values, where **nv** is the number of components. Each value of a vector is represented with a number of bits which defines a maximal dynamic range of the pixel values.

A depth image is an image whose pixel values depths of 3D points. Usually, a depth image is a grey levels image.

An octree-based structure comprises a root node, at least one leaf node and possibly intermediate nodes. A leaf node is a node of the octree-based cube which has no child. All other nodes have children. Each node of an octree-based structure is associated with a cube. Thus, an octree-based structure comprises a set $\{C_j\}$ of at least one cube $C_j$ associated with node(s).

A leaf cube is a cube associated with a leaf node of an octree-based structure.

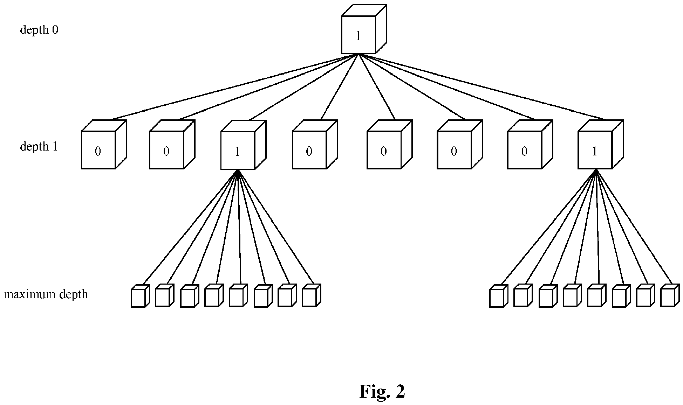

In the example illustrated on **Fig. 2**, the cube associated with the root node (depth 0) is split into 8 sub-cubes (depth 1) and two sub-cubes of depth 1 are then split into 8 sub-cubes (last depth = maximum depth = 2).

The sizes of the cubes of a same depth are usually the same but the present principles are not limited to this example. A specific process may also determine different numbers of sub-cubes per depth, when a cube is split, and/or multiple sizes of cubes of a same depth or according to their depths.

In the following, the term "local octree-based structure determined for a cube" refers to an octree-based structure determined in the 3D space delimited by the cube that encompasses a part of the point cloud to be encoded.

In the opposite, a global octree-based structure refers to an octree-based structure determined in a 3D space delimited by the cube that encompasses the point cloud to be encoded.

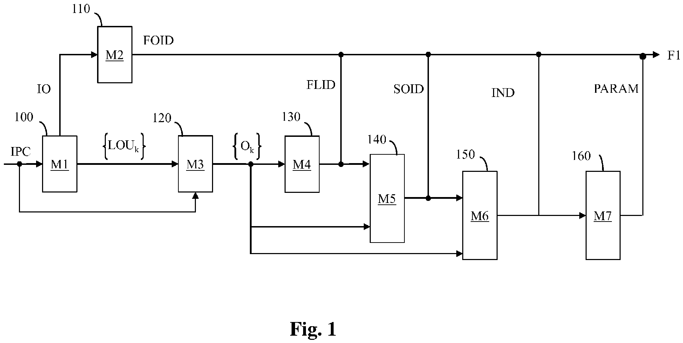

**Fig. 1** shows schematically a diagram of the steps of the method for encoding the geometry of a point cloud IPC representing a 3D object in accordance with an example of the present principles.

In step 100, a module M1 determines an octree-based structure IO comprising at least one cube, by splitting recursively a cube encompassing the point cloud until the leaf cubes, associated with the leaf nodes of said octree-based structure IO, reach down an expected size.

The leaf cubes associated with the leaf nodes of the octree-based structure IO may then include or not points of the point cloud IPC. A leaf cube associated with a leaf node of the octree-based structure IO is named in the following a Largest Octree Unit ($LOU_k$), **k** means an index referencing the Largest Octree Unit associated with a leaf node **k** of the octree-based structure IO.

In step 110, a module M2 encodes a first octree information data FOID representative of the octree-based structure IO.

In step 120, for each LOU$_k$, a module M3 determines if a local octree-based structure O$_k$ is associated with a LOU$_k$ by optimizing a trade-off between a bit-rate R$_{k,n}$ for encoding a candidate octree-based structure O$_{k,n}$ approximating the geometry of points $P_{k,or}$ of the point cloud IPC which are included in said LOU$_k$, and a distortion D$_{k,n}$ taking into account spatial distances between, on one hand, said points $P_{k,or}$ of the point cloud IPC, and on the other hand, points $P_{k,n}$ included in leaf cubes associated with leaf nodes of the candidate octree-based structure O$_{k,n}$.

Mathematically speaking, the distortion D$_{k,n}$ is a metric given by:

$$D_{k,n} = d\left(P_{k,n}, P_{k,OR}\right) + d\left(P_{k,OR}, P_{k,n}\right)$$

where d(A,B) is a metric that measures the spatial distance from a set of points A to a set of points B. This metric is not symmetric, this means that distance from A to B differs from the distance from B to A.

The distance $d(P_{k,n}, P_{k,OR})$ ensures that the points included in leaf cubes associated with leaf nodes of a candidate octree-based structure O$_{k,n}$ are not too far from the point cloud IPC, avoiding coding irrelevant points.

The distance $d(P_{k,OR}, P_{k,n})$ ensures that each point of the point cloud IPC is approximated by points not too far from them, i.e. ensures that all parts of the point cloud IPC are well approximated.

According to an embodiment, the distance d(A,B) is given by:

$$d(A,B) = \sum_{p \in A} \|p - q_{\text{closest}}(p, B)\|_2^2$$

where the norm is the Euclidan distance and q$_{\text{closest}}$($p$, $B$) is the closest point of B from a point p of A defined as

$$q_{\text{closest}}(p,B) = \underset{q \in B}{\text{argmin}} \|p - q\|_2^2.$$

According to the optimization process, it may happen that a LOU$_k$ does not include any point of the point cloud IPC. In that case the LOU$_k$ is named a non-coded LOU$_k$.

It may also happen that the optimization process determines that the points of the point cloud IPC which are included in the LOU$_k$ are not represented (coded) by any candidate octree-based structure O$_{k,n}$. This is the case when the cost for coding those points is too high relatively to the cost associated with R$_{k,n}$ = 0 and the distortion D$_{k,n}$ obtained between already coded points, from other already coded LOU$_k$ for example, and $P_{k,OR}$.

In step 130, for each LOU$_k$, a module M4 encodes a first leaf node information data FLID indicating if a local octree-based structure O$_k$ has been determined for said LOU$_k$.

If a first leaf node information data FLID indicates that a local octree-based structure O$_k$ has been determined for a LOU$_k$, in step 140, a module M5 encodes a second octree information data SOID representative of said determined local octree-based structure O$_k$, and in step 150, a module M6 encodes at least one local coding model information data IND representing a local coding model for each of the at least one leaf node of the local octree-based structure O$_k$, i.e. indicating if the at least one leaf cube of said local octree-based structure O$_k$ includes a set of points resulting from a processing of a part of the point cloud representative of a part of the point cloud IPC, according to the local coding model indicated by the local coding model information data IND.

For instance, the local coding model information data IND is an index, for example an integer, associated with the local coding model used.

Thus, according to an embodiment, the following indexes are used :

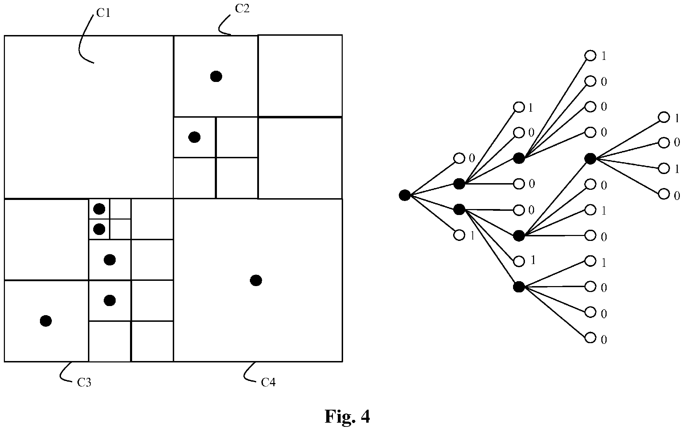

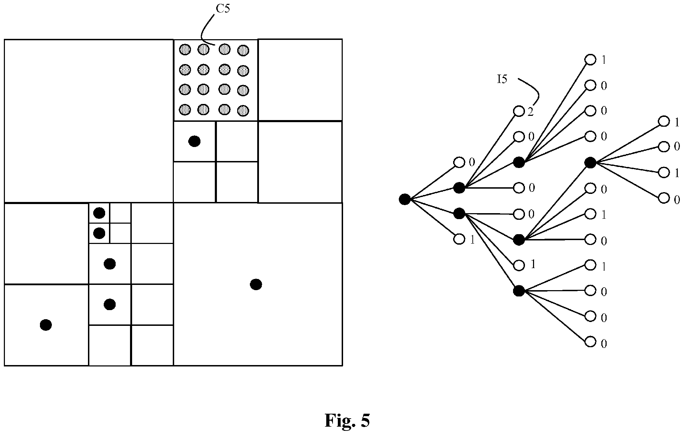

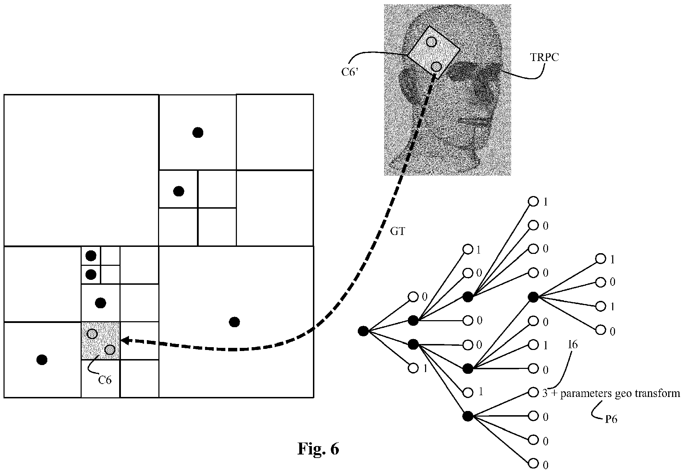

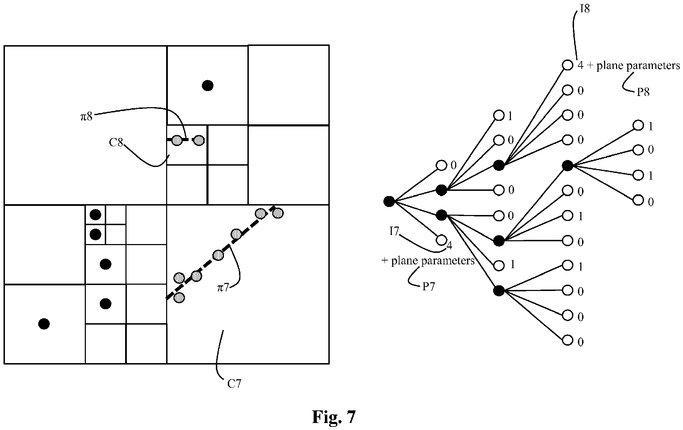

- Index 0 refers to an empty leaf cube. According to this model, no point is present in the leaf cube.
- Index 1 refers to a middle point local coding model, as detailed later with reference to Figure 4. According to this model, a single point is added in the center of the leaf cube.
- Index 2 refers to an upsampling local coding model, as detailed later with reference to Figure 5;
- Index 3 refers to a local coding model using an intercoding of frames, as detailed later with reference to Figure 6. According to this model, points from previous frames are copied with or without a motion vector.
- Index 4 refers to a plane local coding model, as detailed later with reference to Figure 7. According to this model, a plane is added in the leaf cube.

In step 160, a module M7 optionnaly encodes at least one parameter PARAM of the local coding model associated with the leaf.

The first octree information data FOID, the first leaf node information data FLID, the second octree information data SOID, the local coding model information data IND and the optional parameters PARAM of the local coding model may be stored and/or transmitted in a bitstream F1.

According to an embodiment of step 110 and/or 140, illustrated on **Fig. 2**, the first octree information data FOID data and the second octree information data SOID comprises a binary flag per node which is equal to 1 to indicate that a cube associated with said node is split and to 0 otherwise.

According to an embodiment of step 120, the first leaf node information data FLID comprises a binary flag per leaf node which is equal to 1 to indicate if a local octree-based structure $O_k$ has been determined for a $LOU_k$ and to 0 otherwise.

According to an optional variant, the module M2 also generates a maximum depth of the cube splitting.

This avoids signaling first octree information data for all cubes having the maximum depth.

According to an embodiment, the first octree information data FOID, the first leaf node information data FLID, the second octree information data SOID and/or the local coding model information data IND may be coded using an entropy coder like CABAC (a description of the CABAC is found in the specification of HEVC at http://www.itu.int/rec/T-REC-H.265-201612-I/en).

Entropy encoding the second octree information data SOID and/or the local coding model information data IND may be efficient in term of coding, because specific contexts may be used to code the binary flags per node as usually only a few nodes of an octree-based structure are split and the probability for the binary flags associated with neighboring nodes to have a same value is high.

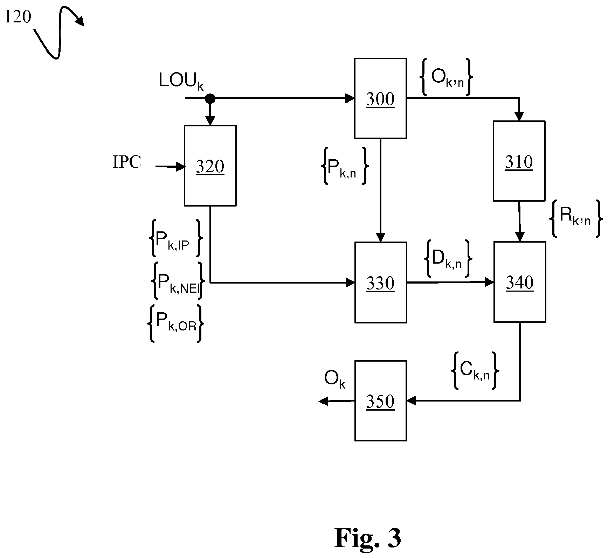

**Fig. 3** shows the diagram of the sub-steps of the step 120 in accordance with an embodiment of the present principles.

As discussed above, an octree-based structure IO comprising at least one $LOU_k$ is obtained, and a Rate Distortion optimization (RDO) process is used to determine a best local octree-based structure $O_k$ for at least one $LOU_k$.

A single flag may then be encoded in the bitstream F1 to indicate if a $LOU_k$ includes or not a point of the point cloud IPC.

A RDO process that is performed on a $LOU_k$ may find a best local octree-based structure $O_k$ from N candidate octree-based structures $O_{k,n}$ ($n \in [1; N]$). The basic principle is to test successively each candidate octree-based structure $O_{k,n}$, and for each candidate octree-based structure $O_{k,n}$ to calculate a Lagrangian cost $C_{k,n}$ given by:

$$C_{k,n} = D_{k,n} + \lambda R_{k,n} \quad (1)$$

where $R_{k,n}$ and $D_{k,n}$ are respectively the bit-rate and distortion detailed above, and $\lambda$ is a fixed Lagrange parameter that may be fixed for all the candidate octree-based structures $O_{k,n}$.

The best local octree-based structure $O_k$ is then obtained by minimizing the Lagrangian cost $C_{k,n}$:

$$O_k = \underset{O_{k,n}}{\arg\min} \, C_{k,n}(O_{k,n}) \quad (2)$$

High values for the Lagrangian parameter strongly penalize the bit-rate $R_{k,n}$ and lead to a low quality of approximation, while low values for the Lagrangian parameter allow easily high values for $R_{k,n}$ and lead to high quality of approximation. The range of values for lambda depends on the distortion metric, the size of the $LOU_k$, and most importantly the distance between two adjacent points. Assuming that this distance is unity, typical values for lambda are in the range from a few hundreds, for very poor coding, to a tenth of unity for good coding. These values are indicative and may also depend on the content.

Determining a best local octree-based structure $O_k$ for a $LOU_k$ is now detailed in accordance with an embodiment of the present principles.

In step 300, the module M3 obtains a set of N candidate octree-based structures $O_{k,n}$ for the $LOU_k$ and obtains a set of points $P_{k,n}$ for each candidate octree-based structure $O_{k,n}$. The points $P_{k,n}$ are points which are determined from the processing according to the local coding model associated with the leaf.

In step 310, the module M3 obtains the bit-rate $R_{k,n}$ for encoding each candidate octree-based structure $O_{k,n}$.

In step 320, the module M3 obtains points $P_{k,or}$ of the point cloud IPC which are included in the $LOU_k$.

In step 330, the module M3 obtains a distortion $D_{k,n}$ for each candidate octree-based structure $O_{k,n}$, each distortion $D_{k,n}$ takes into account the spatial distances between, on one hand, the points $P_{k,OR}$, and on the other hand, the points $P_{k,n}$.

In step 340, the module M3 calculates the Lagrangian cost $C_{k,n}$ according to equation (1) for each candidate octree-based structure $O_{k,n}$.

In step 350, the module M3 obtains the best local octree-based structure $O_k$ according to equation (2) once all the candidate octree-based structures $O_{k,n}$ have been considered.

Note that, as explained above, it may then consider that the best trade-off for a $LOU_k$ is to not code the points included in it. In that case, no local octree-based structure $O_k$ is determined for this $LOU_k$.

According to an embodiment of step 300, when the local coding model, associated with a leaf node of a candidate octree-based structure $O_{k,n}$, is represented by the index 1 meaning the middle point local coding model, the leaf cube associated with the leaf node includes a single point, preferably in the center of the leaf cube.

**Fig. 4** shows an illustration of an example of a candidate octree-based structure $O_{k,n}$ according to this embodiment. This figure represents an example of a quadtree-based structure that splits a square, but the reader will easily extend it to the 3D case by replacing the square by a cube ($LOU_k$).

According to this example, the cube is split into 4 sub-cubes C1, C2 C3 and C4 (depth 1). The sub-cube C1 is associated with a leaf node and does not contain any point. The sub-cube C2 is recursively split into 4 sub-cubes (depth 2). The sub-cube C3 is also recursively split and the sub-cube C4 is not split but a point, located in the center of the cube for example, is associated with it,..., etc.

On the right part of **Fig. 4** is shown an illustration of the candidate octree-based structure. A black circle indicates that a node is split. A binary flag is associated with each white circle (leaf node) to indicate if the square (a cube in the 3D case) includes (1) or not (0) a point.

According to this example, a point is located in the center of a cube because it avoids any additional information about the spatial location of that point once the cube is identified in the octree-based structure. But the present principles are not limited to this example and may extend to any other spatial location of a point in a cube.

According to an embodiment of step 300, when the local coding model, associated with a leaf node of a candidate octree-based structure $O_{k,n}$, is represented by the index 2 meaning the upsampling local coding model, the leaf cube associated with the leaf node includes all points occupying all possible locations in the cube.

**Fig. 5** shows an illustration of an example of a candidate octree-based structure $O_{k,n}$ according to this embodiment.

The leaf cube C5 of a candidate octree-based structure $O_{k,n}$ has a local coding model indicated by the index I5 which is equal to 2, thus signaling the upsampling local coding model. Consequently, the points coded in the cube C5 are coded using the upsampling local coding model. According to this local model, all points (the 16 shaded points represented in the cube C5) occupying all possible locations in the cube are coded.

According to an embodiment of step 300, when the coding local model, associated with a leaf node of a candidate octree-based structure $O_{k,n}$, is represented by the index 3 meaning the intercoding local coding model, the leaf cube associated with the leaf node includes points obtained by a geometrical transform GT of a set of points already coded belonging to a temporal reference point cloud TRPC.

**Fig. 6** shows an illustration of an example of a candidate octree-based structure $O_{k,n}$ according to this embodiment.

The leaf cube C6 of a candidate octree-based structure $O_{k,n}$ has a local coding model indicated by the index I6 which is equal to 3, thus signaling the intercoding local coding model. Consequently, the points coded in the cube C6 are coded using the intercoding local coding model. According to this local model, a cube C6' englobing points belonging to the temporal reference point cloud TRPC is transformed using a geometry transform GT to fit into the cube C6. These associated transformed points are the points coded in the leaf cube C6. Parameters P6 representative of the geometry transform GT are also coded (in the bit-stream F1) in order for the decoder to be able to reproduce the transform GT. Parameters P6 are part of at least one parameter PARAM coded by the module M7 in step 160.

According to an embodiment of step 300, when the local coding model, associated with a leaf node of a candidate octree-based structure $O_{k,n}$, is represented by the index 4 meaning the plane local coding model, the leaf cube associated with the leaf node includes points essentially close to a plane intersecting the cube.

**Fig. 7** shows an illustration of an example of a candidate octree-based structure $O_{k,n}$ according to this embodiment.

The leaf cube C7 (resp. C8) of a candidate octree-based structure $O_{k,n}$ has a coded local model indicated by the index I7 (resp. 18) which is equal to 4, thus signaling the plane local coding model. Consequently, the points coded in the cube C7 (resp. C8) are coded using the plane local coding model. According to this local model, a plane $\pi 7$ (resp. $\pi 8$) intersecting the cube is obtained and points belonging to and/or close to the plane are coded. For example, points whose distance from the plane is lower than a given threshold are coded.

In a variant, the plane $\pi 7$ (resp. $\pi 8$) is represented by plane parameters P7 (resp. P8) which are also coded (in the bit-stream F1) in order for the decoder to be able to determine the plane. Parameters P7 (resp. P8) are part of at least one parameter PARAM coded by the module M7 in step 160.

In the case of the plane local coding model, the points $P_{k,n}$ generated at step 300 are determined according to the neighorhood of the current $LOU_k$. For each cube corresponding to one leaf of the local octree-based structure, the number of points present in the neighborhood of the six faces of the cube are counted. The number of points in the neighborhood of each face is the number of points present in a 3D rectangle of size N outside the considered face, where N is the depth of this rectangle, for instance equal to half the side of the cube, the width and the length of the rectangle being equal to the side of the cube. The direction with the maximum number of points (X, Y or Z) is then considered as the main direction.

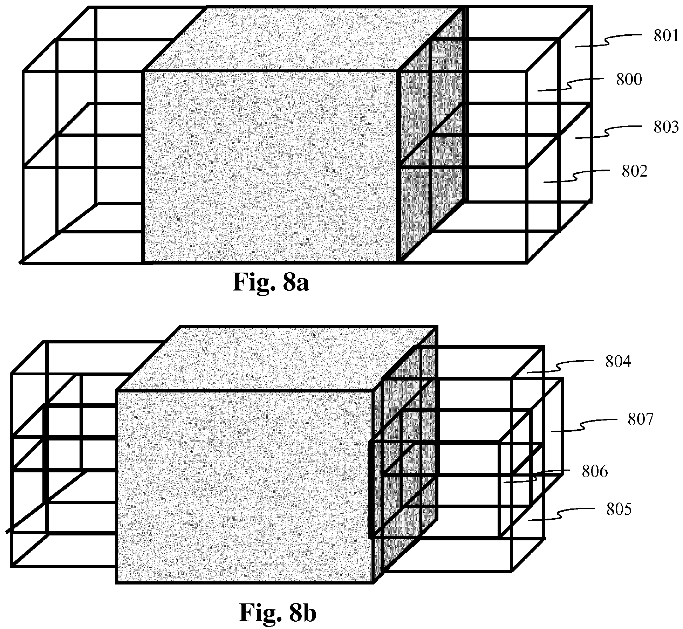

For this direction, the distribution of the points in the neighborhood of the two faces of the cube corresponding to this direction is considered. In order to estimate the distribution of the points and the orientation of the object surface crossing these two main faces, the numbers of points present in sub-cubes of the neighborhood are counted. The numbers of points are counted in eight sub-cubes corresponding to the sub-cubes: top left, top right, bottom left, botttom right and middle top, middle bottom, middle right and middle left, as it will be described with reference to figure 8.

Depending on the two sub-cubes with the maximum number of points in the two main faces of the cube, the cube is represented by the plane intersecting the two maximum sub-cubes of each face. For example, if the two maximum sub-cubes of the faces are the top right and the top Left, a horizontal plane cutting the main faces in 1/4 position is created. As another example, if the two maximum sub-cubes of the faces are the middle right and the middle left, a horizontal plane cutting the faces in position ½ is created. According to the results obtained on the two opposite faces, all the points of the created plane crossing the current cube are interopolated on all the widths of the cubes in order to obtain the set of points $P_{k,n}$.

Figures 8a and 8b illustrate an example of the sub-cubes used to count the number of points in the neighborhood of the two main faces of the cube corresponding to one leaf of the local octree-based structure and to evaluate the distribution of the points and the best way to represent the cube/leaf by a plane.

For one main direction (the X axis in Figures 8a and 8b), the Figure 8.a. shows the four first sub-cubes used to count the number of points in the neighborhoods of the two main faces: top right 800, top left 801, bottom right 802 and botton left 803. The Figure 8.b. shows the middle sub-cubes: middle top 804, middle bottom 805, middle right 806 and middle left 807.

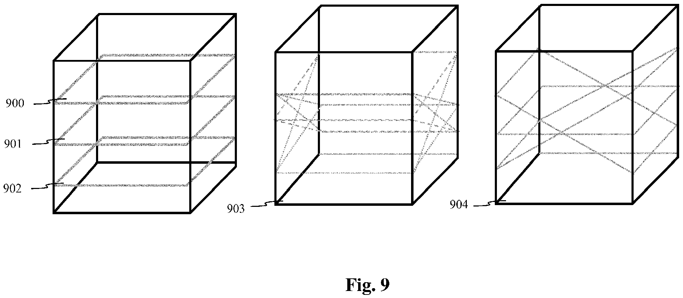

Figure 9 shows an illustration of an example of the created planes. For example, if, for the two main faces, the two maximum numbers of points are obtained in the top left and the top right sub-cubes, the created plane 900 will be horizontal in the position ¼ . If the maximum numbers of points are obtained in the middle sub-cubes or the bottom sub-cubes, the created planes will be horizontal in position ½ (plane 901) and ¾ (plane 902). If the two sub-cubes of each face are not aligned like for the previous examples, the created planes could be in various orientations (different planes 903 and 904).

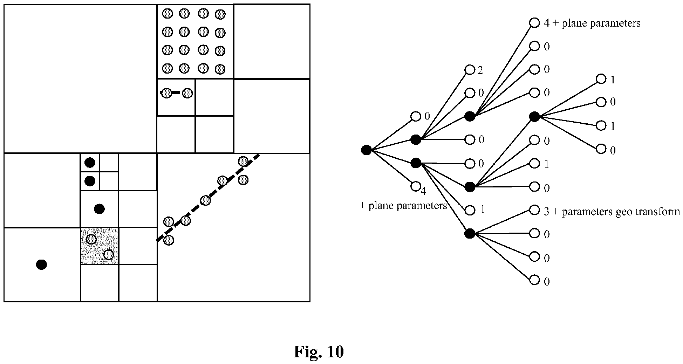

Figure 10 shows an illustration of an example of a candidate octree-based structure, according to a combination of several local models, each used local model being characterized by its index and optionally by associated parameters.

According to an embodiment of the step 310, the second octree information data SOID comprises a binary flag per node which is equal to 1 to indicate that a cube associated with said node is split and to 0 otherwise (embodiment of step 140). For each leaf node, the local coding model IND comprises an index signaling the model used for the node, for instance IND=0 if no point is coded, IND=1 for the middle-point model, IND=2 for the upsampling model, etc. The bit-rate $R_{k,n}$ is the sum of the numbers of the binary flags comprised in the second octree information data SOID and the bits needed to represent each local coding model index IND associated with each leaf node.

According to a variant of steps 320 and 330, in step 320, the module M3 also obtains points $P_{k,IP}$ of an inverse-projected point cloud IPPC which are included in the $LOU_k$. Said inverse-projected point cloud IPPC is obtained by inverse-projecting at least one depth image representative of a part of the point cloud IPC, as proposed, for example, in "Image-Based Surface Compression", Tilo Ochotta & Dietmar Saupe, September 2008, in Computer Graphics Forum.

In step 330, the module M3 obtains a distortion $D_{k,n}$ that takes into account spatial distances between, on one hand, said points $P_{k,or}$ of the point cloud, and on the other hand, points $P_{k,n}$ included in leaf cubes associated with leaf nodes of the candidate octree-based structure $O_{k,n}$ together with the points $P_{k,IP}$.

Mathematically speaking, the distortion $D_{k,n}$ is a metric given by:

$$D_{k,n} = d\left(P_{k,n} \cup P_{k,IP}, P_{k,OR}\right) + d\left(P_{k,OR}, P_{k,n} \cup P_{k,IP}\right)$$

The distance $d(P_{k,OR}, P_{k,n} \cup P_{k,IP})$ ensures that each point of the point cloud IPC is approximated by points not too far from them, i.e. ensures that parts of the point cloud IPC which are not represented by the inverse-projected point cloud IPPC are well approximated.

According to a variant of the steps 320 and 330, in step 320, the module M3 obtains neighboring point $P_{k,NEI}$ which are either points of the inverse point cloud IPPC which are included in at least one neighboring Largest Coding Unit LOU$_{k,NEI}$ of the LOU$_k$, or points included in leaf cubes associated with leaf nodes of local octree-based structures previously determined for said at least one neighboring Largest Coding Unit LOU$_{k,NEI}$.

In step 330, the module M3 obtains a distortion that also takes into account the spatial distances between the points $P_{k,or}$ and the neighboring points $P_{k,NEI}$.

Mathematically speaking, the distortion D$_{k,n}$ is a metric given by:

$$D = d\big(P_{k,n} \cup P_{k,IP} \cup P_{k,NEI}, P_{k,OR}\big) + d\big(P_{k,OR}, P_{k,n} \cup P_{k,IP} \cup P_{k,NEI}\big)$$

The distance $d(P_{k,OR}, P_{k,n} \cup P_{k,IP} \cup P_{k,NEI})$ ensures also that each point of the point cloud IPC is approximated by points not too far, including also neighboring points included in neighboring Largest Coding Units LOU$_{k,NEI}$. It is advantageous because it avoids coding too finely points of the point cloud IPC, close to the edge of the neighboring Largest Coding Units LOU$_{k,NEI}$ that could be already well represented by points included in the neighboring Largest Coding Units LOU$_{k,NEI}$. Consequently, this saves bit-rates by coding less points, and with a small impact on the distortion.

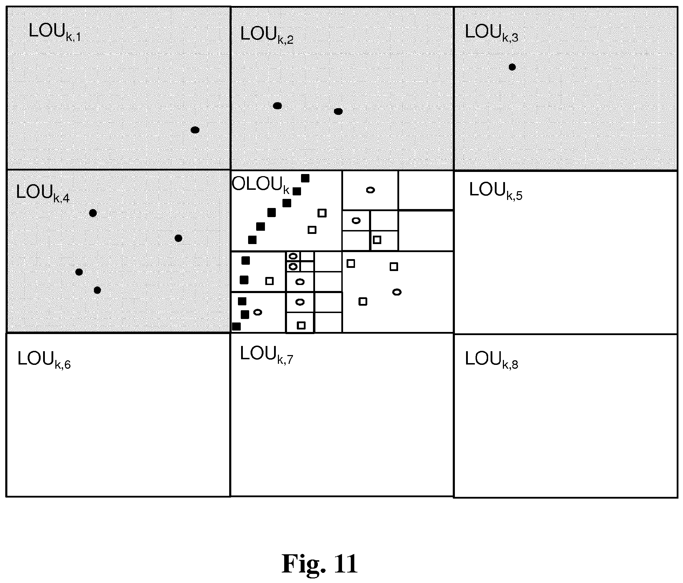

According to an embodiment of this variant, illustrated on **Fig. 11**, the Largest Coding Unit LOU$_{k,NEI}$ are defined in order to have at least one vertex, one edge or one face in common with the LOU$_k$.

**Fig. 11** shows an illustration of an example of neighboring Largest Coding Units LOU$_{k,NEI}$. This figure represents an example of a quadtree-based structure relative to the LOU$_k$ and eight neighboring LOU$_{k,1-8}$ of the LOU$_k$. The points $P_{k,OR}$ are represented by white rectangles. The points $P_{k,IP}$ are represented by black rectangles. The points $P_{k,NEI}$ are represented by black circles. The point $P_{k,n}$ are represented by white circles. It is understood that the 2D description is for illustration only. In 3D, one should consider the 26 neighboring cubes instead of the 8 neighboring squares of the 2D illustration.

According to this example, the points $P_{k,NEI}$ are the points included in four LOU$_{k,1-4}$, i.e. points that are either included in cubes associated with leaf nodes of local octree-based structures associated with these four LOU$_{k,1-4}$ and/or points of the inverse-projected colored point cloud IPPC which are included in said LOU$_{k,1-4}$.

According to an embodiment of the method, a candidate octree-based structure O$_{k,n}$ approximating the geometry of points ($P_{k,or}$) of the point cloud which are included in a leaf cube LOU$_k$ is obtained by pruning an initial candidate octree-based structure O$_n$ at a given level **le**.

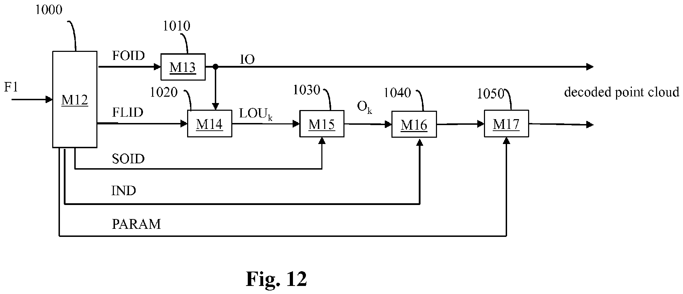

**Fig. 12** shows schematically a diagram of the steps of the method for decoding, from a bitstream, the geometry of a point cloud representing a 3D object in accordance with an example of the present principles.

In step 1000, a module M12 decodes, from the bitstream F1, the first octree information data FOID.

In step 1010, a module M13 obtains an octree-based structure IO from the first octree information data FOID.

In step 1000, a module M12 decodes, from the bitstream F1, a first leaf node information data FLID, and in step 1020, a module M14 determines if a LOU$_k$ associated with a leaf node of the octree-based structure IO is associated with a local octree-based structure O$_k$ from said first leaf node information data FLID.

If a first leaf node information data FLID indicates that a local octree-based structure O$_k$ has been associated with a LOU$_k$, in step 1000, the module M12 decodes, from the bitstream F1, a second octree information data SOID, local coding model information data IND and optionnaly at least one parameter PARAM, and in step 1030 a module M15 obtains a local octree-based structure O$_k$ for said LOU$_k$ from the second octree information data SOID. Then, in step 1040, for each leaf node of the local octree-based structure O$_k$ for said LOU$_k$, a module M16 determines from the local coding model information data IND decoded points belonging to the cube associated with the leaf node, based on the local coding model represented by the information data IND.

In a variant, the local model is determined in steps 1040 and 1050 by modules M16 and M17 using both the local coding model information data IND and the at least one parameter PARAM.

In the case of the plane local coding model, the same process than during the encoding process is used to create all the points $P_{k,n}$ corresponding to the local octree-based structure. The two main faces are found to evaluate the number of points in the neighborhood of each face and the main direction is defined. For the two main faces, the numbers of points are counted in eight sub-cubes corresponding to the sub-cubes: top left, top right, bottom left, botttom right and middle top, middle bottom, middle right and middle left. The positions of the two maximum sub-cubes of each face are used to create all the points $P_{k,n}$ crossing the current cube as during the encoding process.

The octree-based structure IO in which the LOU$_k$ are replaced by the local octree-based structure O$_k$ represent the geometry of the point cloud.

According to an embodiment, the first octree information data FOID, the first leaf node information data FLID, the second octree information data SOID, the local coding model information data IND and/or the at least one parameter PARAM may be obtained by entropy-decoding the bitstream F1. The entropy-decoding may be compliant with a CABAC-like coding.

The present principles have been described by considering leaf cubes LOU$_k$ associated with the leaf nodes of an octree-based structure IO.

According to an embodiment of the encoding and decoding methods, a cube C encompassing at least one point of the point cloud IPC is considered rather than a $LOU_k$.

The point cloud IPC is then encoded as follows:

The steps 100 and 110 are cancelled.

In step 120, the module M3 determines if a local octree-based structure $O_k$ is associated with the encompassing cube C including at least one point of the point cloud IPC by optimizing a trade-off between a bit-rate $R_{k,n}$ for encoding a candidate octree-based structure $O_{k,n}$ approximating the geometry of points $P_{k,or}$ of the point cloud which are included in said an encompassing cube C, and a distortion $D_{k,n}$ taking into account spatial distances between, on one hand, said points $P_{k,or}$ of the point cloud which are included in said encompassing cube, and on the other hand, points $P_{k,n}$ included in leaf cubes associated with leaf nodes of the candidate octree-based structure $O_{k,n}$.

In step 130, a first leaf node information data FLID indicating if a local octree-based structure $O_k$ has been determined for said encompassing cube C is encoded.

If said first leaf node information data FLID indicates that a local octree-based structure $O_k$ has been determined for said encompassing cube C, in step 140, an octree information data SOID representative of said determined local octree-based structure $O_k$ is encoded, and in step 150, for each leaf node of the local octree-based structure $O_k$, a local coding model information data IND, representing a local coding model associated with the leaf, is encoded. Optionnaly, in step 160, at least one parameter PARAM is also encoded.

The point cloud IPC is then decoded as follows:

In step 1000, a first leaf node information data FLID, indicating if a local octree-based structure $O_k$ has been determined for an encompassing cube C including at least one point representing at least a part of the point cloud to be decoded, is decoded from a bitstream.

If said first leaf node information data FLID indicates that a local octree-based structure $O_k$ has been associated with said encompassing cube C, in step 1000, an octree information data SOID representative of said determined local octree-based structure $O_k$, local coding model information data and optionnaly at least one parameter PARAM are decoded from a bitstream. In step 1030, a local octree-based structure $O_k$ is obtained for said encompassing cube (C) from said octree information data SOID. Then in step 1040, for each leaf node of the local octree-based structure $O_k$, one determines from the local coding model information data IND decoded points belonging to the cube associated with the leaf node, based on the local coding model represented by the information data IND.

In a variant, the local model is determined using both the local coding model information data IND and the at least one parameter PARAM.

On **Fig. 1-12**, the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

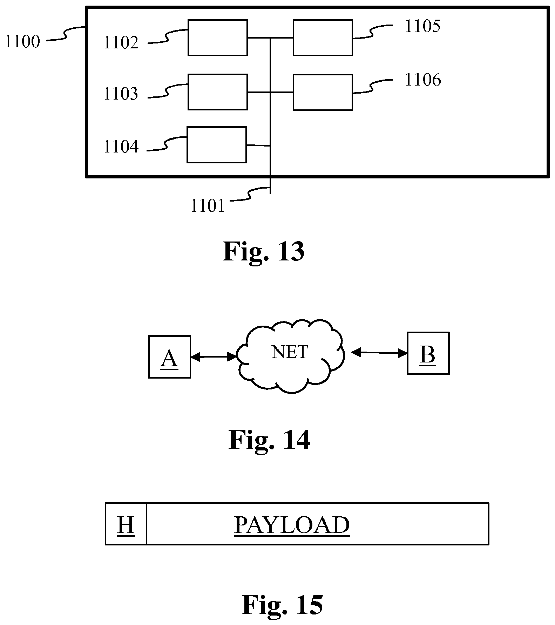

**Fig. 13** represents an exemplary architecture of a device 1100 which may be configured to implement a method described in relation with **Fig. 1-12**.

Device 1100 comprises following elements that are linked together by a data and address bus 1101:

- a microprocessor 1102 (or CPU), which is, for example, a DSP (or Digital Signal Processor);
- a ROM (or Read Only Memory) 1103;
- a RAM (or Random Access Memory) 1104;
- an I/O interface 1105 for reception of data to transmit, from an application; and
- a battery 1106.

In accordance with an example, the battery 1106 is external to the device. In each of mentioned memory, the word « register » used in the specification can correspond to area of small capacity (some bits) or to very large area (e.g. a whole program or large amount of received or decoded data). The ROM 1103 comprises at least a program and parameters. The ROM 1103 may store algorithms and instructions to perform techniques in accordance with present principles. When switched on, the CPU 1102 uploads the program in the RAM and executes the corresponding instructions.

RAM 1104 comprises, in a register, the program executed by the CPU 1102 and uploaded after switch on of the device 1100, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the point cloud IPC is obtained from a source. For example, the source belongs to a set comprising:

- a local memory (1103 or 1104), e.g. a video memory or a RAM (or Random Access Memory), a flash memory, a ROM (or Read Only Memory), a hard disk ;
- a storage interface (1105), e.g. an interface with a mass storage, a RAM, a flash memory, a ROM, an optical disc or a magnetic support;
- a communication interface (1105), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Sem iconductor)).

In accordance with an example of the decoding or a decoder, the decoded point cloud is sent to a destination; specifically, the destination belongs to a set comprising:

- a local memory (1103 or 1104), e.g. a video memory or a RAM, a flash memory, a hard disk ;
- a storage interface (1105), e.g. an interface with a mass storage, a RAM, a flash memory, a ROM, an optical disc or a magnetic support;
- a communication interface (1105), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® ora Bluetooth ® interface);
- a rendering device; and
- a display.

In accordance with examples of encoding or encoder, the bitstream F1 is sent to a destination. As an example, the bitstream F1 is stored in a local or remote memory, e.g. a video memory (1104) or a RAM (1104), a hard disk (1103). In a variant, the bitstream F1 is sent to a storage interface (1105), e.g. an interface with a mass storage, a flash memory, ROM, an optical disc or a magnetic support and/or transmitted over a communication interface (1105), e.g. an interface to a point to point link, a communication bus, a point to multipoint link or a broadcast network.

In accordance with examples of decoding or decoder, the bitstream F1 is obtained from a source. Exemplarily, a bitstream is read from a local memory, e.g. a video memory (1104), a RAM (1104), a ROM (1103), a flash memory (1103) or a hard disk (1103). In a variant, the bitstream is received from a storage interface (1105), e.g. an interface with a mass storage, a RAM, a ROM, a flash memory, an optical disc or a magnetic support and/or received from a communication interface (1105), e.g. an interface to a point to point link, a bus, a point to multipoint link or a broadcast network.

In accordance with examples, THE device 1100 being configured to implement an encoding method described in relation with **Fig. 1-11,** belongs to a set comprising:

- a mobile device ;
- a smartphone or a TV set with 3D capture capability
- a communication device ;
- a game device ;
- a tablet (or tablet computer);
- a laptop ;
- a still imagecamera;
- a video camera ;
- an encoding chip;
- a still image server; and
- a video server (e.g. a broadcast server, a video-on-demand server or a web server).

In accordance with examples, device 1100 being configured to implement a decoding method described in relation with **Fig. 12**, belongs to a set comprising:

- a mobile device ;
- a Head Mounted Display (HMD)
- (mixed reality) smartglasses
- an holographic device
- a communication device ;
- a game device ;
- a set top box;
- a TV set;
- a tablet (or tablet computer);
- a laptop ;
- a display
- a sterescopic display and
- a decoding chip.

According to an example of the present principles, illustrated in **Fig. 14,** in a transmission context between two remote devices A and B over a communication network NET, the device A comprises a processor in relation with memory RAM and ROM which are configured to implement a method for encoding a colored point cloud as described in relation with the **Figs. 1-11** and the device B comprises a processor in relation with memory RAM and ROM which are configured to implement a method for decoding as described in relation with **Fig. 12**.

In accordance with an example, the network is a broadcast network, adapted to broadcast encoded colored point clouds from device A to decoding devices including the device B.

A signal, intended to be transmitted by the device A, carries the bitstream F1.

This signal may thus carry the first octree information data FOID, the first leaf node information data FLID, the second octree information data SOID and/or the second leaf node information data SLID.

**Fig. 15** shows an example of the syntax of such a signal when the data are transmitted over a packet-based transmission protocol. Each transmitted packet P comprises a header H and a payload PAYLOAD.

According to embodiments, the payload PAYLOAD may comprise at least one of the following elements:

- the first octree information data FOID representative of the octree-based structure IO;
- the first leaf node information data FLID indicating if a local octree-based structure $O_k$ has been determined for a $LOU_k$ associated with a leaf node of the octree-based structure IO;
- the second octree information data SOID representative of a local octree-based structure $O_k$;
- the local coding model information data IND representing a local coding model associated with the leaf;
- parameters of the local coding model associated with the leaf.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

Examples of local coding models have been described in the above. Other exalmples are also possible and are within the scope of the present disclosure.

**Claims**

1. A method for encoding the geometry of a point cloud (IPC) representing a 3D object comprising:

   a) determining (120) if a local octree-based structure ($O_k$) is associated with an encompassing cube including at least one point of the point cloud (IPC) by optimizing a trade-off between a bit-rate ($R_{k,n}$) for encoding a candidate octree-based structure ($O_{k,n}$) approximating the geometry of points ($P_{k,or}$) of the point cloud which are included in said encompassing cube (C), and a distortion ($D_{k,n}$) taking into account spatial distances between, on one hand, said points ($P_{k,or}$) of the point cloud which are included in said encompassing cube, and on the other hand, points ($P_{k,n}$) included in leaf cubes associated with leaf nodes of the candidate octree-based structure ($O_{k,n}$);
   b) encoding (130) a first leaf node information data (FLID) indicating if a local octree-based structure ($O_k$) has been determined for said encompassing cube (C);
   c) if said first leaf node information data (FLID) indicates that a local octree-based structure ($O_k$) has been determined for said encompassing cube (C),

      d) encoding (140) an octree information data (SOID) representative of said determined local octree-based structure (Ok); and
      e) encoding a (150) local coding model information data (IND) representing a local coding model defining a set of points resulting from a processing of a part of the point cloud.

2. A device for encoding the geometry of a point cloud representing a 3D object comprising means for:

   a) determining if a local octree-based structure ($O_k$) is associated with an encompassing cube including at least one point of the point cloud (IPC) by optimizing a trade-off between a bit-rate ($R_{k,n}$) for encoding a candidate octree-based structure ($O_{k,n}$) approximating the geometry of points ($P_{k,or}$) of the point cloud which are included in said encompassing cube (C), and a distortion ($D_{k,n}$) taking into account spatial distances between, on one hand, said points ($P_{k,or}$) of the point cloud which are included in said encompassing cube, and on the other hand, points ($P_{k,n}$) included in leaf cubes associated with leaf nodes of the candidate octree-based structure ($O_{k,n}$);
   b) encoding a first leaf node information data (FLID) indicating if a local octree-based structure ($O_k$) has been determined for said encompassing cube (C);
   c) if said first leaf node information data (FLID) indicates that a local octree-based structure ($O_k$) has been

determined for said encompassing cube (C),

d) encoding an octree information data (SOID) representative of said determined local octree-based structure (Ok); and
e) encoding a local coding model information data (IND) representing a local coding model defining a set of points resulting from a processing of a part of the point cloud.

3. The method of claim 1 or the device of claim 2, wherein the method also comprises a step of or the device also comprises means for encoding at least one parameter (PARAM) of the local coding model.

4. The method of claim 1 or 3 or the device of claim 2 or 3, wherein the method also comprises steps of or the device also comprises means for:

- determining (100) an octree-based structure (IO) comprising at least one cube, by splitting recursively a cube encompassing the point cloud until the leaf cubes ($LOU_k$), associated with the leaf nodes of said octree-based structure (IO), reach down an expected size;
- encoding (110) another octree information data (FOID) representative of the octree-based structure (IO); and
- encoding each leaf cube ($LOU_k$), associated with the leaf nodes of said octree-based structure (IO), from steps a-e).

5. The method or the device of any one of the preceding claims, wherein the processing consists in adding a single point in a leaf cube associated with the leaf node.

6. The method or the device of claim 5, wherein the single point is located in the center of the leaf cube.

7. The method or the device of any one of claims 1-4, wherein the processing consists in an up-sampling.

8. The method or the device of any one of claims 1-4, wherein the processing consists in an inter-coding of frames.

9. The method or the device of any one of claims 1-4, wherein the processing consists in adding a plane in a leaf cube associated with the leaf node.

10. A method for decoding, from a bitstream, a point cloud representing a 3D object, comprising:

f) decoding (1000), from the bitstream, a first leaf node information data (FLID) indicating if a local octree-based structure ($O_k$) has been determined for an encompassing cube including at least one point representing at least a part of the point cloud to be decoded;
g) if said first leaf node information data (FLID) indicates that a local octree-based structure ($O_k$) has been associated with said encompassing cube (C),

h) decoding (1000), from the bitstream, an octree information data (SOID) representative of said determined local octree-based structure ($O_k$), and a local coding model information data (IND) representing a local coding model defining a set of points resulting from a processing of a part of the point cloud;
i) obtaining (1030) a local octree-based structure ($O_k$) for said encompassing cube (C) from said octree information data (SOID);
j) determining (1040) if a leaf cube of said local octree-based structure ($O_k$) includes a set of points of the point cloud to be decoded from the local coding model information data (IND), and in that case, adding the set of points to the leaf cube of said local octree-based structure (Ok).

11. A device for decoding, from a bitstream, a point cloud representing a 3D object, comprising means for:

f) decoding, from the bitstream, a first leaf node information data (FLID) indicating if a local octree-based structure ($O_k$) has been determined for an encompassing cube including at least one point representing at least a part of the point cloud to be decoded;
g) if said first leaf node information data (FLID) indicates that a local octree-based structure ($O_k$) has been associated with said encompassing cube (C),

h) decoding, from the bitstream, an octree information data (SOID) representative of said determined local

octree-based structure ($O_k$), and a local coding model information data (IND) representing a local coding model defining a set of points resulting from a processing of a part of the point cloud;

i) obtaining a local octree-based structure ($O_k$) for said encompassing cube (C) from said octree information data (SOID);

j) determining if a leaf cube of said local octree-based structure includes a set of points of the point cloud to be decoded from the local coding model information data, and in that case, adding the set of points to the leaf cube of said local octree-based structure.

**12.** The method of claim 10 or the device of claim 11, wherein the method also comprises a step of or the device also comprises means for decoding at least one parameter (PARAM) of the local coding model.

**13.** The method of claim 10 or 12 or the device of claim 11 or 12, wherein the method also comprises a step of or the device also comprises means for:

- decoding (1000), from the bitstream, another octree information data (FOID);
- obtaining (1010) an octree-based structure (IO) from said another octree information data (FOID);
- for each of the leaf cube ($LOU_k$) of said octree-based structure (IO),

  - obtaining a local octree-based structure for said leaf cube from steps f-j).

**14.** A signal carrying:

- a first octree information data (FOID) representative of an octree-based structure (IO) representing a splitting of a 3D space delimited by a cube encompassing a point cloud representing a 3D object;
- for each leaf cube ($LOU_k$), associated with the leaf nodes of said octree-based structure (IO)
- a first leaf node information data (FLID) indicating if a local octree-based structure ($O_k$) has been determined for each leaf cube ($LOU_k$) associated with a leaf node if said octree-based structure (IO);
- if a first leaf node information data (FLID) indicates that a local octree-based structure ($O_k$) has been determined for a leaf cube ($LOU_k$),

  - a second octree information data (SOID) representative of said determined local octree-based structure (Ok); and
  - a local coding model information data (IND) representing a local coding model defining a set of points resulting from a processing of a part of the point cloud.

**15.** A non-transitory processor-readable medium having stored thereon instructions to execute the steps of a method according to one of claims 1, 3-10 when this program is executed on a computer.

**Fig. 1**

depth 0

depth 1

maximum depth

**Fig. 2**

120

LOU$_k$

IPC

$\{O_{k,n}\}$

$\{P_{k,n}\}$

$\{R_{k,n}\}$

$\{P_{k,IP}\}$

$\{P_{k,NEI}\}$

$\{P_{k,OR}\}$

$\{D_{k,n}\}$

$\{C_{k,n}\}$

$O_k$

300

320

310

330

340

350

**Fig. 3**

Fig. 4

**Fig. 5**

Fig. 6

**Fig. 7**

Fig. 8a

Fig. 8b

**Fig. 9**

Fig. 10

**Fig. 11**

1000

1010

FOID    M13    IO

F1    M12    FLID    1020    M14    LOU$_k$    1030    M15    O$_k$    1040    M16    1050    M17    decoded point cloud

SOID

IND

PARAM

**Fig. 12**

1100

1102

1103

1104

1105

1106

1101

**Fig. 13**

A ← → NET ← → B

**Fig. 14**

| H | PAYLOAD |
|---|---------|

**Fig. 15**

Europäisches
Patentamt

European
Patent Office

Office européen
des brevets

## EUROPEAN SEARCH REPORT

Application Number

EP 17 30 6698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/324914 A1 (LUO TAO [CN] ET AL) 30 October 2014 (2014-10-30) <br> * abstract * <br> * paragraph [0002] - paragraph [0004] * <br> * paragraph [0022] - paragraph [0050] * <br> ----- | 1-6, 10-15 | INV. <br> G06T9/40 <br> H04N19/597 <br> H04N19/147 <br> H04N19/96 <br> H04N19/593 |
| X | SONG I W ET AL: "Progressive compression and transmission of PointTexture images", JOURNAL OF VISUAL COMMUNICATION AND IMAGE REPRESENTATION, ACADEMIC PRESS, INC, US, vol. 17, no. 5, 1 October 2006 (2006-10-01), pages 1090-1107, XP024905084, ISSN: 1047-3203, DOI: 10.1016/J.JVCIR.2005.10.001 [retrieved on 2006-10-01] <br> * abstract * <br> * page 1091, paragraph 3 - paragraph 5 * <br> * page 1092, last paragraph - page 1098, last line * <br> ----- | 1-4,7, 10-15 | H04N19/11 <br> H04N19/107 <br> H04N19/19 <br> H04N19/54 |
| X | LIN TANG ET AL: "Compression algorithm of scattered point cloud based on octree coding", 2016 2ND IEEE INTERNATIONAL CONFERENCE ON COMPUTER AND COMMUNICATIONS (ICCC), IEEE, 14 October 2016 (2016-10-14), pages 85-89, XP033094437, DOI: 10.1109/COMPCOMM.2016.7924670 [retrieved on 2017-05-10] <br> * section II * <br> ----- <br> -/-- | 1-6, 10-15 | TECHNICAL FIELDS SEARCHED (IPC) <br><br> G06T <br> H04N |

The present search report has been drawn up for all claims

| Place of search | Date of completion of the search | Examiner |
|---|---|---|
| Berlin | 4 June 2018 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 30 6698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SEBASTIEN LASSERRE: "Point Cloud Compression presentation to the video groups", 118. MPEG MEETING; 3-4-2017 - 7-4-2017; HOBART; (MOTION PICTURE EXPERT GROUP OR ISO/IEC JTC1/SC29/WG11), no. m40715, 6 April 2017 (2017-04-06), XP030069059, * page 11 * * page 13 * | 8,9 | |
| Y | GARCIA DIOGO C ET AL: "Context-based octree coding for point-cloud video", 2017 IEEE INTERNATIONAL CONFERENCE ON IMAGE PROCESSING (ICIP), IEEE, 17 September 2017 (2017-09-17), pages 1412-1416, XP033322807, DOI: 10.1109/ICIP.2017.8296514 [retrieved on 2018-02-20] * abstract * * page 1412, left-hand column, last paragraph * * section 2 * | 8 | |
| Y | AINALA KHARTIK ET AL: "An improved enhancement layer for octree based point cloud compression with plane projection approximation", SPIE DEFENSE AND SECURITY SYMPOSIUM; 16-20 MARCH 2008; ORLANDO, FLORIDA, UNITED STATES, SPIE, US, vol. 9971, 27 September 2016 (2016-09-27), pages 99710R-99710R, XP060078033, ISSN: 0277-786X, DOI: 10.1117/12.2237753 ISBN: 978-1-5106-1723-0 * abstract * * sections 1-2 * | 9 | |

TECHNICAL FIELDS
SEARCHED     (IPC)

-/--

The present search report has been drawn up for all claims

| Place of search | Date of completion of the search | Examiner |
|---|---|---|
| Berlin | 4 June 2018 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 30 6698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/347120 A1 (CHOU PHILIP A [US] ET AL) 30 November 2017 (2017-11-30)<br>* abstract *<br>* paragraph [0004] - paragraph [0005] *<br>* paragraph [0050] - paragraph [0059] *<br>* paragraph [0124] *<br>----- | 1-4,8 | |
| Y | DE QUEIROZ RICARDO L ET AL: "Motion-Compensated Compression of Dynamic Voxelized Point Clouds", IEEE TRANSACTIONS ON IMAGE PROCESSING, IEEE SERVICE CENTER, PISCATAWAY, NJ, US, vol. 26, no. 8, 1 August 2017 (2017-08-01) , pages 3886-3895, XP011653025, ISSN: 1057-7149, DOI: 10.1109/TIP.2017.2707807 [retrieved on 2017-06-13] | 8 | |
| A | * abstract *<br>* sections III, IV, V.D *<br>* figure 4 *<br>----- | 1-3, 10-15 | |
| | | | **TECHNICAL FIELDS SEARCHED (IPC)** |

The present search report has been drawn up for all claims

| Place of search | Date of completion of the search | Examiner |
|---|---|---|
| Berlin | 4 June 2018 | Kontopodis, D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 30 6698

This annex lists the patent family members relating to the patent documents cited in  the above-mentioned European search report.
The members are as contained in the European Patent Office EDP file on
The European Patent Office is in no way liable for these particulars which are merely given for the purpose of information.

04-06-2018

| Patent document cited in search report | | | Publication date | Patent family member(s) | | | Publication date |
|---|---|---|---|---|---|---|---|
| US 2014324914 | A1 | | 30-10-2014 | CN | 103959342 | A | 30-07-2014 |
| | | | | EP | 2783353 | A1 | 01-10-2014 |
| | | | | JP | 5993024 | B2 | 14-09-2016 |
| | | | | JP | 2015505389 | A | 19-02-2015 |
| | | | | KR | 20140096298 | A | 05-08-2014 |
| | | | | US | 2014324914 | A1 | 30-10-2014 |
| | | | | WO | 2013075334 | A1 | 30-05-2013 |
| US 2017347120 | A1 | | 30-11-2017 | US | 2017347120 | A1 | 30-11-2017 |
| | | | | WO | 2017209961 | A1 | 07-12-2017 |

EPO FORM P0459

For more details about this annex : see Official Journal of the European Patent Office, No. 12/82

**REFERENCES CITED IN THE DESCRIPTION**

**Non-patent literature cited in the description**

- **TILO OCHOTTA ; DIETMAR SAUPE.** Image-Based Surface Compression. *Computer Graphics Forum,* September 2008